# EUROPEAN PATENT SPECIFICATION

(11) **EP 4 329 433 B1**
(45) Date of publication and mention of the grant of the patent: **10.12.2025**
(21) Application number: 23191926.7
(22) Date of filing: 17.08.2023
(51) Int. Cl.: H05B 47/115, H05B 47/19

(54) **METHOD FOR OPERATING LIGHTING SYSTEM, A MOTION SENSOR, AND A LIGHTING SYSTEM INCLUDING THE SAME**
VERFAHREN ZUM BETRIEB EINER BELEUCHTUNGSANLAGE, EIN BEWEGUNGSSENSOR UND EINE BELEUCHTUNGSANLAGE MIT DIESEM SENSOR
METHODE DE FONCTIONNEMENT D'UN SYSTEME D'ECLAIRAGE, DETECTEUR DE MOUVEMENT ET SYSTEME D'ECLAIRAGE COMPRENANT LE MEME DETECTEUR DE MOUVEMENT

(30) Priority: 25.08.2022 NL 2032856
(43) Date of publication of application: 28.02.2024
(73) Proprietor: CHK Develop B.V., 3208 LD Spijkenisse (NL)
(72) Inventor: WANG, Lingyi, Shanghai, 200127 (CN); PENG, Ke, 2992 DK Barendrecht (NL)
(74) Representative: Arnold & Siedsma

(56) References cited:
- US-A1- 2017 288 954
- US-A1- 2019 011 268

## Description

The present application concerns a method for operating a lighting system including a plurality of motion sensors. The present application further concerns a motion sensor configured to operate in a lighting system. The present application finally concerns a lighting system including a plurality of such motion sensors.

Lighting systems that turn on and off automatically have become increasingly popular. Limiting the on-time of lighting units included in said lighting system extends the overall lifetime of the system and decreases average use of power. Operating such a lighting system can for example be done based on motion detection. The assumption is that the lighting units only have to be turned on when one motion sensor from a plurality of motion sensors included in the lighting system detects motion.

Operation of the lighting system can for example be done according to a master-slave structure. Motion sensors that operate in a slave mode can detect motion, and when doing so, notify a master entity. The master entity then decides what to do, and can, for example, turn on the lighting units.

For an installer to initialize a lighting system such that it operates in this master-slave structure can be time consuming in itself, and the time that this initialization takes is especially impactful in operations where lighting systems are often reconfigured. Also, such a system comprises lighting units, motion sensors, as well as a master entity and this variation in components makes the system more complex. Also, because such lighting systems comprise multiple different components, a surplus of each is required to ensure that upon reconfiguration the installer is not short on either.

Known from the art is the method disclosed in US 2017/0288954 A1, which is provided for localizing a physical network fault in a network having a plurality of network participants. The method comprises detecting by a first network participant and a second network participant that communication with a third network participant and the respective further participant of the first and second network participants is disrupted. In response to the detecting, the first network participant and second network participant automatically reduce their baud rate. The method comprises further establishing a connection between the first network participant and second network participant with use of the reduced baud rate, detecting by the first network participant and/or the second network participant that communication with the third network participant is not possible with use of the reduced baud rate, and storing information on the impossibility of communication with the third network participant.

Also known from the art are the systems, apparatuses, and methods disclosed in US 2019/0011268 A1, which are for determining a layout of a living space. In some implementations, a residential sensor device performs operations including receiving activity information collected by the one or more sensors, where the activity information includes sensed activity of one or more users at one or more user locations of a plurality of user locations. The residential sensor device further performs operations including determining one or more routes in the living space based on one or more sets of user locations of the plurality of user locations. The residential sensor device further performs operations including determining one or more object locations of one or more objects in the living space based on the one or more routes.

It is an object of the present application to provide a lighting system and a method for operating it, in which initialization is less time consuming. It is a further object of the present application to provide a lighting system and a method for operating it that is less complex, and which allows for simpler reconfiguration.

At least some of these objects are at least partially resolved by using a method according to claim 1, which is a method for operating a lighting system comprising one or more lighting units and a plurality of functionally identical motion sensors. The method comprises auto-initializing, by the lighting system, one motion sensor in the lighting system to operate in a master mode and remaining motion sensors in the lighting system to operate in a slave mode, sending a notification signal, by at least one motion sensor operating in the slave mode, to the motion sensor operating in the master mode upon said at least one motion sensor operating in the slave mode detecting motion, and sending lighting instructions, by the motion sensor operating in the master mode, for turning on the one or more lighting units upon receiving said notification signal.

Since the lighting system initializes itself, there is no need for extensive technical knowledge of the operation of the motion sensors or lighting units, and this installation or reconfiguration of the system can be performed relatively easy.

Said auto-initializing comprises determining, by a motion sensor from the plurality of motion sensors, that it should operate in the master mode upon being turned on, and initializing that motion sensor to operate in the master mode, including sending initialization instructions to the remaining motion sensors, and initializing the remaining motion sensors to operate in the slave mode based on the initialization instructions. This helps prevent two motion sensors from both initializing to operate in the master mode.

The step of determining to operate in the master mode is implemented in one of two alternative ways:
- In the first alternative, said determining comprises randomizing a first amount of time, and determining to operate in the master mode upon determining that said motion sensor has not received initialization instructions from the remaining motion sensors within the first amount of time.
- In the second alternative, said determining comprises randomizing a number, determining to operate in the master mode when it is determined that the random number is equal to, or larger than the predetermined threshold, and randomizing the number again upon determining that said motion sensor has not received initialization instructions within a predetermined second amount of time.

To make it more likely that when one motion sensor sends out initialization instructions that all of the remaining motion sensors can receive those, in some embodiments said auto-initializing comprises turning on all of the motion sensors from the plurality of motions sensors at substantially the same time.

In some embodiments, each motion sensor can both be initialized to operate in the master mode, and be initialized to operate in the slave mode.

To further preserve energy, in some embodiments, the method further comprises sending lighting instructions, by the motion sensor operating in the master mode, for turning off the one or more lighting unit, upon determining that said motion sensor has not received a notification signal within a predetermined third amount of time.

To make use of the capabilities of each motion sensor, in some embodiments, the method further comprises sending lighting instructions, by the motion sensor operating in the master mode, for turning on the one or more lighting units upon said motion sensor operating in the master mode detecting motion. In this case, it is preferred, to further preserve energy, that the method then further comprises sending lighting instructions, by the motion sensor operating in the master mode, for turning off the one or more lighting units, upon determining that the motion sensor operating in the master mode has not detected motion within a predetermined fourth amount of time.

And, in embodiments combining previously mentioned features, lighting instructions for turning off the one or more lighting units are sent upon determining that the motion sensor operating in the master mode has not received a notification signal, nor detected motion within a predetermined fifth amount of time, wherein the predetermined fifth amount of time is preferably equal to the third and/or fourth amounts of time.

At least some of the aforementioned objects are also at least partially resolved by providing motion sensor according to claim 6, which is configured to operate in a lighting system that comprises one or more lighting units said motion sensor and a plurality of other motion sensors functionally identical thereto. The motion sensor comprises communication means configured to communicate with the one or more lighting units, and the other motion sensors in the lighting system, and processing means, configured to:
- auto-initialize the motion sensor to operate either in a master mode or in a slave mode;
- wherein the processing means are configured to, when the motion sensor operates in the slave mode, send a notification signal to a motion sensor among the other motion sensors that operates in the master mode, upon detecting motion;
- wherein the processing means are configured to, when the motion sensor operates in the master mode, send lighting instructions via the communication means for turning on the one or more lighting units, upon receiving the notification signal from one or more of said other motion sensors;
the processing means are further configured to perform auto-initialization during which the processing means determine whether the motion sensor should operate in the master mode upon being turned on, initialize the motion sensor to operate in the master mode upon determining that the motion sensor should operate in the master mode, said initializing including sending said initialization instructions to the other motion sensors in the lighting system via the communication means, and initialize the motion sensor to operate in the slave mode when the motion sensor has not been initialized to operate in the master mode and in response to receiving initialization instructions from another motion sensor in the lighting system to do so.

In a first alternative, the processing means are configured to determine whether the motion sensor should operate in the master mode during which the processing means randomize a first amount of time determine that the motion sensor should operate in the master mode upon determining that said motion sensor has not received initialization instructions from the other motion sensors within the first amount of time.

In a second alternative, the processing means are configured to determine whether the motion sensor should operate in the master mode during which the processing means randomize a number, determine that the motion sensor should operate in the master mode when it is determined that the random number is equal to, or larger than the predetermined threshold, randomize the number again, upon determining that said motion sensor has not received initialization instructions within a predetermined second amount of time.

In some embodiments, the processing means are configured to, when the motion sensor operates in the master mode, send lighting instructions via the communication means for turning off the one or more lighting units upon determining that notification signals were not received for a predetermined third amount of time.

In some embodiments, the processing means are configured to, when the motion sensor operates in the master mode send lighting instructions for turning on the one or more lighting units upon detecting motion. For such embodiments, it is preferred that the processing means are configured to, when the motion sensor operates in the master mode, are further configured to send lighting instructions via the communication means for turning off the one or more lighting units, upon determining that no motion was detected for a predetermined fourth amount of time.

In embodiments combining aforementioned features, lighting instructions for turning off the one or more lighting units are sent upon determining that the motion sensor operating in the master mode has not received a notification signal, nor detected motion for a predetermined fifth amount of time, wherein the fifth amount of time is preferably equal to the third and/or fourth amounts of time.

To avoid having to store possibly extensive lists of addresses, in some embodiments, the communication means, to send the notification signal to the motion sensor operating in the master mode, are further configured to broadcast the notification signal. For the same or at least similar reason, in some embodiments, the communication means, to send the initialization instructions to the other motion sensors in the lighting system, are further configured to broadcast the initialization instructions. For the same or at least similar reasons, the communication means, to send lighting instructions, are further configured to broadcast the lighting instructions.

At least some of the aforementioned objects are also at least partially resolved for a lighting system according to claim 11, which comprises a plurality of motion sensors according to any of the aforementioned embodiments, and one or more lighting units, each lighting units being configured to receive lighting instructions from any one of the motion sensors from the plurality of motion sensors.

In some embodiments, the lighting system further comprises a control bus to which the one or more lighting units are connected, and to which the plurality of motion sensors is connected via their respective communication means.

In some embodiments, each of the one or more lighting units comprises one or more lights, communication means, configured to receive the lighting instructions, and processing means configured to turn the one or more lights on or off upon receiving lighting instructions to do so.

In some embodiments, the one or more lighting units are connected to the control bus via their respective communication means.

In some embodiments, the lighting system further comprises a power line to which the one or more lighting units, and the plurality of motion sensors are connected.

### DESCRIPTION OF THE FIGURES

Further preferred embodiments of the present invention and particular advantages thereof will be further discussed in relation to the accompanying figures, wherein:
figures 1A and 1B each shown possible layouts of lighting systems according to the invention;
figure 2 shows a schematic of a lighting system known from the prior art;
figure 3 shows a schematic of a lighting system according to the invention;
figure 4 shows a diagram illustrating auto-initialization of a plurality of motion sensors.

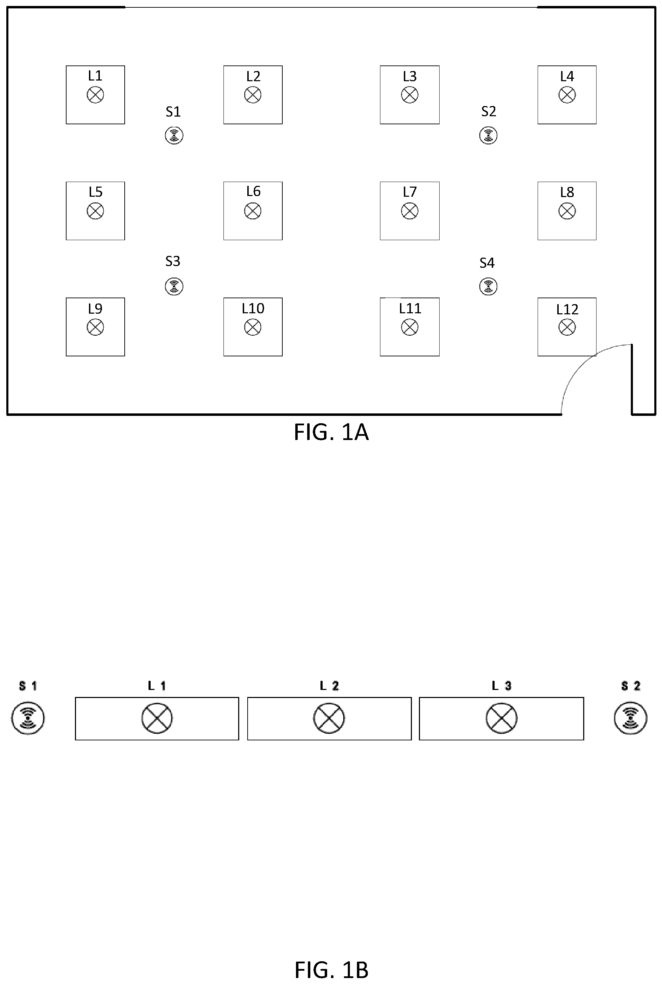

Referring to figure 1A, a lighting system according to the invention is shown which comprises twelve lighting units L1-L12 and four motion sensors S1-S4. In this embodiment, both the lighting units and the motion sensors are arranged in a grid. Referring to figure 1B, another lighting system according to the invention is shown, which comprises three lighting units L1-L3, and two motion sensors S1-S2. In this embodiment, the motion sensors and lighting units are arranged in a line. The skilled person will appreciate that a lighting system according to the invention can also include any other amount of lighting units, and any other plurality of motion sensors. Additionally, the components of the lighting system (e.g. lighting units and motion sensors) can also be arranged in other arrangements.

Multiple types of motion sensors can be included. For example, motion sensors based on microwaves (e.g. 2.4 gigahertz or 5.8 gigahertz electromagnetic waves) or based on pyroelectric infrared (PIR).

In some lighting systems, when any one motion sensor included in said lighting system detects motion, all of the lighting units included in said lighting system are turn on. The skilled person will appreciate that just because lighting units and motion sensors are arranged in the same room, they do not have to be part of the same lighting system. Depending on the exact configuration, the layout shown in figure 1A may also be achieved by two lighting systems: A first lighting system including the six left most lighting units L1, L2, L5, L6, L9, L10, and the two left most motion sensors S1, S3; a second lighting system including the six right most lighting units L3, L4, L7, L8, L11, L12, and the two right most motion sensors S2, S4.

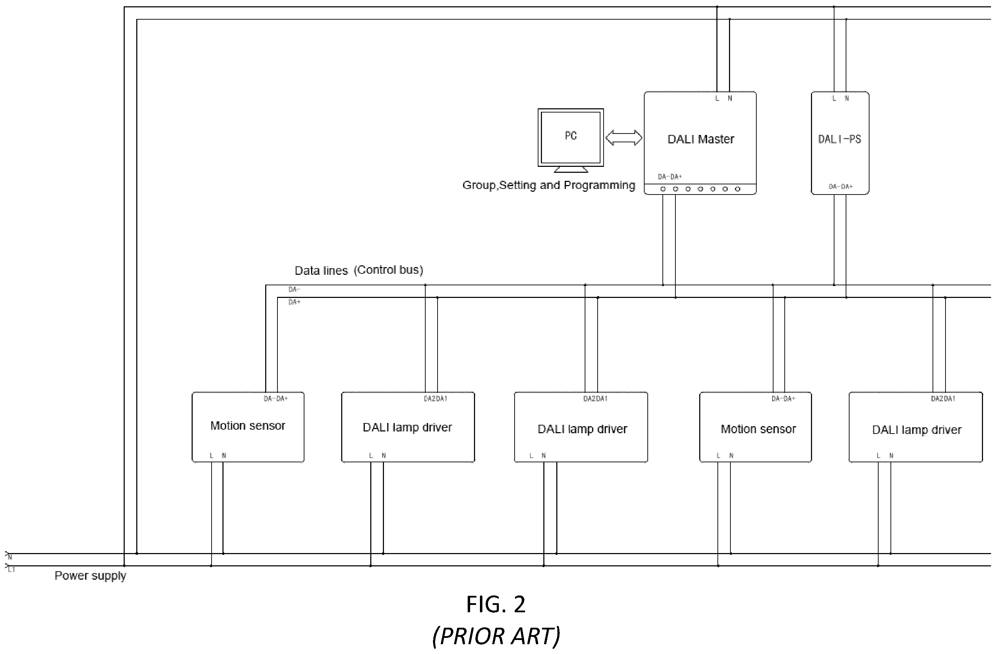

Referring to figure 2, a schematic of a lighting system known from the prior art is shown. This system comprises a master entity, two motion sensors, three lamp drivers, and power supply (PS) entity. Each component (e.g. master entity, motion sensors, lamp drivers, and power supply) is coupled to both the power supply and the control bus, preferably in parallel. In the context of this application, lamp driver and lighting unit may be used synonymously.

The components may communicate with each other via the control bus using one of a plurality of interfaces, such as the Digitally Addressable Lighting Interface (DALI), or its successor DALI2. The skilled person is aware of other interfaces that can be used.

In the system of figure 2, upon detecting motion a motion sensors sends a notification signal to the master entity. The master entity, upon receiving the notification signal, can decide on whether lighting instructions should be send to the lighting units to turn on.

With the development of lighting technology, motion sensors, as a device node in the lighting system, play an important role in energy saving, emission reduction and on-demand lighting. One to one, or one to many operating methods are generally adopted for lighting systems using through motion sensors. In such methods, one motion senor controls one lighting unit, or multiple lighting units at the same time.

However, the sensing range of a single motion sensor is limited. In lighting systems for some specific, or simply large operations, multiple motion sensors need to be arranged to cover the personnel situation in all or different areas.

Conventional operating methods make it complex to reliably operate a group of lighting units with multiple motion sensors. This is because multiple motion sensors may detect motion at different times and send lighting instructions at different times, which causes overlapping comments, causing confusion in the control signal.

If a master entity is used to control and coordinate multiple motion sensors, it is necessary to program and configure in advance through the background system to preset the control function. Therefore, the cost of additional equipment is high, and professional technicians are required for equipment installation, system configuration, and post-maintenance.

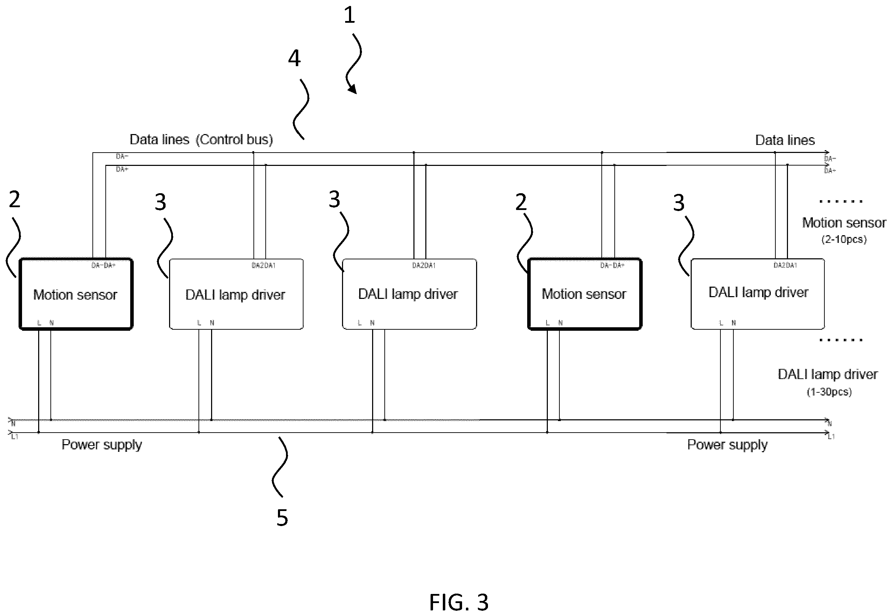

Referring to figure 3, a schematic of a lighting system 1 according to the invention is shown. This lighting system 1 includes a control bus 4, which may in itself comprise two data lines, and a power supply 5, which may in itself comprise two power lines. Each lighting unit 3 and each motion sensors 2 is coupled to both the control bus 4 and the power supply 5. While figure 3 shows two motion sensors 2 and three lamp drivers 3, the lighting system 1 may comprise any plurality of motion sensors 2 and any amount of lamp drivers 3.

In the embodiment shown, the motion sensors are identical. However, the skilled person will appreciate that this is not strictly necessary. The motion sensors only have to be functionally identical, which in the context of the present application should be understood as being indistinguishable from one another by the further components from the lighting units.

The motion sensors 2 may comprise communication means, and processing means (not shown). The communication means may be configured to communicate with the one or more lighting units 3, and the other motion sensors 2 in the lighting system.

Lighting units 3 included in the lighting system comprise one or more lights and communication means, configured to receive the lighting instructions, and processing means configured to turn the one or more lights on or off upon receiving lighting instructions to do so.

The lighting system 1 auto-initializes such that one motion senor 2 operates in the master mode, and the remaining motion sensors 2 operate in the slave mode.

When motion sensors 2 that operate in the slave mode detects motion, they may send a notification signal to the motion sensor 2 that operates in the master mode. In embodiments where the lighting system comprises a control bus 4, said motion sensors may send this notification signal by broadcasting it over said control bus 4.

When the motion sensor that operates in the master mode receives a notification signal it may send lighting instructions to lighting units L1, L2, etc. The motion sensor that operates in the master mode may also send lighting instructions upon detecting motion itself. In embodiments where the lighting system comprises a control bus, said motion sensor may send these lighting instructions by broadcasting them over said control bus.

Preferably, directly before or directly after the motion sensor that operates in the master mode sends out the lighting instructions, it sends clearing instructions to the remaining motion sensors that operate in the slave mode to clear any unsend notification signals. This reduces traffic over the control bus.

In some embodiments, the motion sensor that operates in the master mode may internally store the state of the lighting units.

If the motion sensor that operates in the master mode sends the lighting units instructions to turn on, they may remain on until instructed otherwise. Similarly, if the motion sensor that operates in the master mode sends the lighting units instructions to turn off, they may remain off until instructed otherwise.

After sending instructions for the lighting units to turn on, start a timer for some predetermined amount of time and wait until this timer lapses. If the motion sensor that operates in the master mode then detects motion, or receives a notification signal from a motion sensor that operates in the slave mode, it resets this timer so that it will again start from the predetermined amount of time. When the timer expires (i.e. when it is determined that no motion was sensed, and no notification signals were received during said predetermined amount of time) the motion sensor that operates in the master mode may send lighting instructions for the lighting units to turn off.

In an alternative embodiment, lighting units may themselves maintain such a timer. The lighting instructions in this case may further include one command sequence instructing the lighting units to (i) turn on, (ii) wait for a predetermined amount of time, and (iii) then turn off.

If the motion sensor that operates in the master mode sends the lighting units this particular command sequence, they turn on, wait for a predetermined amount of time (the same or different from the previously mentioned predetermined amounts of time), and then turn off. If, while the lighting units are turned on, and waiting for said predetermined amount of time, this particular command sequence is received again, each lighting unit may reset its respective timer back to the corresponding predetermined amount of time.

Compared with the scheme of figure 2, the embodiment in figure 3 realizes an auto-initializing lighting system and method for operating it. The method can be said to be based on signal collection, broadcasting, processing and unified execution of instructions triggered by multiple motion sensors. Finally, through the operating method in which only one of the motion sensors sends lighting instructions to the multiple lighting units in the form of broadcast after autonomous information exchange, the many to many operating method can be realized.

It solves the problem that equipment and technicians need to be configured on site when multiple motion sensors are controlled. It avoids the confusion of switch signals and realizes plug and play without connecting external equipment and secondary configuration system. The installation is simplified, and the investment is reduced.

In some embodiments, each motion sensor, before sending instructions via the control bus, will first detect whether instructions are being transmitted on the control bus. If so, the motion sensor will wait until the control bus is free, and then, unless meanwhile instructed otherwise, will send the intended unsend notification signal.

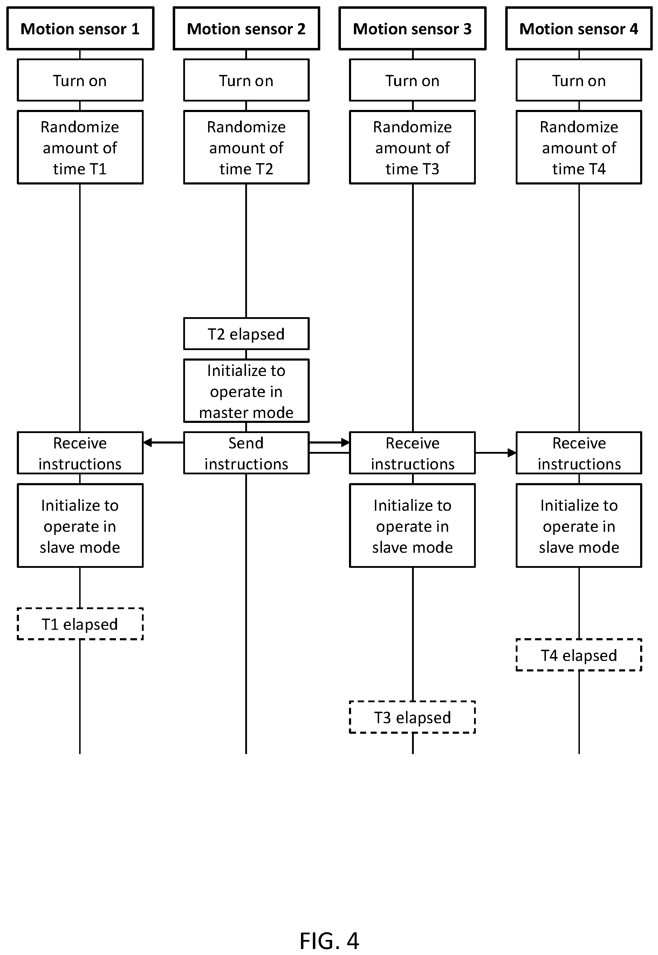

Referring to figure 4, a diagram illustrating one embodiment of a method in which a lighting system auto-initializes for one motion sensor to operate in the master mode and the remaining motion sensors to operate in the slave mode.

In the preferred embodiment shown, the motion sensors are turned on at the same time. This may for example be achieved by connecting these motion sensors to the same power supply as shown in figure 3, and start providing power to all motion sensors at the same time.

Each motion sensor, upon being turned on, randomizes an amount of time (T1, T2, T3, or T4). In the embodiment shown, the randomized amounts of time are, in ascending order: Time T2, time T1, time T4, and time T3. The skilled person will appreciate that any order may be the result of the randomization.

After time T2 has elapsed, motion sensor 2 determines that it should operate in the master mode since it has not received initialization instructions from other motion sensors within time T2. Motion sensor 2 then initializes to operate in the master mode. This initializing includes sending initialization instructions, from motion sensor 2, to the motion sensors 1, 3, and 4. Motion sensors 1, 3, and 4, have not yet initialized to operate in the master mode and receive the initialization instructions from motion sensor 2. In response thereto, motion sensors 1, 3, and 4 initialize to operate in the slave mode.

After motion sensors 1, 3, and 4 initialize to operate in the slave mode, when the times T1, T3, and T4, respectively, elapse, they will not determine to operate in the master mode because they have received initialization instructions from motion sensor 2 within time T1, T3, and T4, respectively.

In a lighting system, there will always be one motion sensor that randomizes the shortest amount of time. Hence, there will always be one motion sensor that determines to operate in the master mode first. In this embodiment, that is motion sensor 2. Individual motion sensors do not have to be configured by an installer to operate in the master mode or the slave mode. Because each motion sensor will itself determine whether it should operate in the master mode, it is safe to say that for the lighting system as a whole there will be a motion sensor from the plurality of motion sensors that determines it should operate in the master mode. Therefore, the lighting system can be said to auto-initialize.

In the embodiment shown each motion sensor can both be initialized to operate in the master mode, and be initialized to operate in the salve mode. However, motion sensors do not operate in both modes at the same time.

While in the embodiment shown in figure 4, said determining to operate in the master mode is implemented by randomizing an amount of time and determining that it should operate in the master mode upon determining that it has not received initialization instructions from the other motion sensors within the first amount of time, other implementations are also conceivable.

In another embodiment according to the invention, a motion sensor may determine to operate in the master mode by randomizing a number and comparing that to a predetermined threshold. If the number generated is equal to, or larger than the predetermined threshold, the motion sensor determines that it should operate in the master mode. Otherwise, the motion sensor will wait for some predetermined amount of time before randomizing another number and checking that with the predetermined threshold.

In this approach the total amount of time a motion sensor postpones auto-initializing to operate in the master mode depends on how often a number is generated before one exceeds the predetermined threshold, times the corresponding predetermined amount of time.

In another embodiment according to the invention, each motion sensor from the plurality of motion sensors may comprise a switch, a jumper connector, or any other type of hardware indicator of which a motion sensor may check the status. Hardware indicators may be set in a plurality of states (e.g. initialize in the master mode or initialize in the salve mode). The user may, for example, set the switch on one motion sensor to a first state 'master mode' and set the switch on the remaining motion sensors to 'slave mode.'

In another embodiment, each motion sensor, after being turn on, may immediately start detecting motion before being initialized to operate in the master mode or in the slave mode. In the system as a whole, the first motion sensor that detects motion will initialize to operate in the master mode. This also allows for one motion sensor in the lighting system to be the first to determine that it should operate in the master mode.

In some embodiments, auto-initialization may be performed every time the lighting system is turned off and on again. In other embodiments, the auto-initialization step may just be performed after the lighting system is reconfigured (e.g. motion sensors or lighting units are added or removed).

The skilled person will appreciate that in the process of having motion sensors determine whether to operate in the master mode, when any type of value is to be randomized, that the range over which said randomization is to take place should be proportional to the amount of motion sensors involved. This to further help avoid two motion sensors to initialize to operate in the master mode at the same time. The embodiment discussed in relation to figure 4, for example, includes four sensors. The range from which an amount of time is to be randomized, should thus be sufficiently wide to make it fairly unlikely for four randomized amounts of time to be exactly the same, or at least to make it likely that from four randomized amounts of time, the smallest amount is well distinguishable from the second smallest amount.

In the above, the present invention has been described using detailed embodiments thereof. However, the present invention is not limited to these embodiments. Various modifications to the embodiments are possible without deviating from the scope of the present invention, which is defined by the appended claims and their equivalents.

## Claims

1. A method for operating a lighting system (1) comprising one or more lighting units (3) and a plurality of functionally identical motion sensors (2), comprising:
auto-initializing, by the lighting system (1), one motion sensor (2) in the lighting system (1) to operate in a master mode and remaining motion sensors (2) in the lighting system (1) to operate in a slave mode;
sending a notification signal, by at least one motion sensor (2) operating in the slave mode, to the motion sensor (2) operating in the master mode upon said at least one motion sensor (2) operating in the slave mode detecting motion;
sending lighting instructions, by the motion sensor (2) operating in the master mode, for turning on the one or more lighting units (3) upon receiving said notification signal;
wherein said auto-initializing comprises:
determining, by a motion sensor (2) from the plurality of motion sensors (2), that it should operate in the master mode upon being turned on, and initializing that motion sensor (2) to operate in the master mode, including sending initialization instructions to the remaining motion sensors (2);
initializing the remaining motion sensors (2) to operate in the slave mode based on the initialization instructions;
wherein said determining comprises either:
randomizing a first amount of time, determining to operate in the master mode upon determining that said motion sensor (2) has not received initialization instructions from the remaining motion sensors (2) within the first amount of time, or;
randomizing a number, determining to operate in the master mode when it is determined that the random number is equal to, or larger than a predetermined threshold, randomizing the number again upon determining that said motion sensor (2) has not received initialization instructions within a predetermined second amount of time.

2. The method of claim 1, wherein each motion sensor (2) from the plurality of motion sensors (2) comprises a hardware indicator configured to be set by a user in a plurality of states, and
wherein said determining comprises determining to operate in the master mode if the hardware indicator is in a first state from the plurality of states.

3. The method of any of the preceding claims, wherein said auto-initializing comprises turning on all of the motion sensors (2) from the plurality of motions sensors (2) at substantially the same time, and/or;
wherein each motion sensor (2) can both be initialized to operate in the master mode, and be initialized to operate in the slave mode.

4. The method of any of the preceding claims, further comprising either:
sending lighting instructions, by the motion sensor (2) operating in the master mode, for turning off the one or more lighting unit (3), upon determining that said motion sensor (2) has not received a notification signal within a predetermined third amount of time, or;
sending lighting instructions, by the motion sensor (2) operating in the master mode, for turning on the one or more lighting units (3) upon said motion sensor (2) operating in the master mode detecting motion, and preferably sending lighting instructions, by the motion sensor (2) operating in the master mode, for turning off the one or more lighting units (3), upon determining that the motion sensor (2) operating in the master mode has not detected motion within a predetermined fourth amount of time.

5. Method of claim 4, wherein lighting instructions for turning off the one or more lighting units (3) are sent upon determining that the motion sensor (2) operating in the master mode has not received a notification signal, nor detected motion within a predetermined fifth amount of time;
wherein the predetermined fifth amount of time is preferably equal to the third and/or fourth amounts of time.

6. A motion sensor (2) configured to operate in a lighting system (1) that comprises one or more lighting units (3), said motion sensor (2) and a plurality of other motion sensors (2) functionally identical thereto, the motion sensor (2) comprising:
communication means configured to communicate with the one or more lighting units (3), and the other motion sensors (2) in the lighting system (1);
processing means, configured to:
auto-initialize the motion sensor (2) to operate either in a master mode or in a slave mode;
wherein the processing means are configured to, when the motion sensor (2) operates in the slave mode, send a notification signal to a motion sensor (2) among the other motion sensors (2) that operates in the master mode, upon detecting motion;
wherein the processing means are configured to, when the motion sensor (2) operates in the master mode, send lighting instructions via the communication means for turning on the one or more lighting units (3), upon receiving the notification signal from one or more of said other motion sensors (2);
wherein the processing means are configured to perform auto-initialization during which the processing means:
determine whether the motion sensor (2) should operate in the master mode upon being turned on;
initialize the motion sensor (2) to operate in the master mode upon determining that the motion sensor (2) should operate in the master mode, said initializing including sending said initialization instructions to the other motion sensors (2) in the lighting system (1) via the communication means;
initialize the motion sensor (2) to operate in the slave mode when the motion sensor (2) has not been initialized to operate in the master mode and in response to receiving initialization instructions from another motion sensor (2) in the lighting system (1) to do so;
wherein the processing means are configured to determine whether the motion sensor (2) should operate in the master mode during which the processing means:
randomize a first amount of time, and determine that the motion sensor (2) should operate in the master mode upon determining that said motion sensor (2) has not received initialization instructions from the other motion sensors (2) within the first amount of time, or;
randomize a number, determine that the motion sensor (2) should operate in the master mode when it is determined that the random number is equal to, or larger than a predetermined threshold, and randomize the number again, upon determining that said motion sensor (2) has not received initialization instructions within a predetermined second amount of time.

7. The motion sensor (2) of claim 6, further comprising a hardware indicator configured to be set by a user in one of a plurality of states, and wherein the processing means are configured to determine whether the motion sensor (2) should operate in the master mode during which the processing means:
determine that the motion sensor (2) should operate in the master mode if the hardware indicator is in a first state from the plurality of states.

8. The motion sensor of any of the claims 6-7, wherein the processing means are configured, when the motion sensor (2) operates in the master mode, to either:
send lighting instructions via the communication means for turning off the one or more lighting units (3) upon determining that notification signals were not received for a predetermined third amount of time, or;
send lighting instructions for turning on the one or more lighting units (3) upon detecting motion, and preferably to send lighting instructions via the communication means for turning off the one or more lighting units (3), upon determining that no motion was detected for a predetermined fourth amount of time.

9. The motion sensor (2) of claim 8, wherein the processing means are configured to send the lighting instructions for turning off the one or more lighting units (3) upon determining that the motion sensor (2) operating in the master mode has not received a notification signal, nor detected motion for a predetermined fifth amount of time;
wherein the fifth amount of time is preferably equal to the third and/or fourth amounts of time.

10. The motion sensor (2) of any of the claims 6-9, wherein the communication means, to send the notification signal to the motion sensor (2) operating in the master mode, are further configured to broadcast the notification signal, and/or;
wherein the communication means, to send the initialization instructions to the other motion sensors in the lighting system (1), are further configured to broadcast the initialization instructions, and/or;
wherein the communication means, to send lighting instructions, are further configured to broadcast the lighting instructions.

11. A lighting system (1) comprising a plurality of motion sensors (2) according to any of the claims 6-10, and one or more lighting units (3), each lighting unit (3) being configured to receive lighting instructions from any one of the motion sensors (2) from the plurality of motion sensors (2).

12. The lighting system (1) according to claim 11, further comprising:
- a control bus (4) to which the one or more lighting units (3) are connected, and to which the plurality of motion sensors (2) is connected via their respective communication means, and/or;
- a power line to which the one or more lighting units (3), and the plurality of motion sensors (2) are connected.

13. The lighting system (1) according to claim 11 or 12, wherein each of the one or more lighting units (3) comprises:
one or more lights;
communication means, configured to receive the lighting instructions, and
processing means configured to turn the one or more lights on or off upon receiving lighting instructions to do so;
wherein the one or more lighting units (3) are preferably connected to the control bus (4) via their respective communication means.

## Patentansprüche

1. Verfahren zum Betreiben eines Beleuchtungssystems (1), das eine oder mehrere Beleuchtungseinheiten (3) und eine Vielzahl von funktionsgleichen Bewegungssensoren (2) umfasst, das Folgendes umfasst:
automatisches Initialisieren eines Bewegungssensors (2) in dem Beleuchtungssystem (1) durch das Beleuchtungssystem (1), um in einem Master-Modus betrieben zu werden, und der verbleibenden Bewegungssensoren (2) in dem Beleuchtungssystem (1), um in einem Slave-Modus betrieben zu werden;
Senden eines Benachrichtigungssignals durch mindestens einen in dem Slave-Modus betriebenen Bewegungssensor (2) an den in dem Master-Modus betriebenen Bewegungssensor (2), wenn der mindestens eine im Slave-Modus betriebene Bewegungssensor (2) eine Bewegung erkennt;
Senden von Beleuchtungsanweisungen durch den in dem Master-Modus betriebenen Bewegungssensor (2) zum Einschalten der einen oder mehreren Beleuchtungseinheiten (3) nach Empfang des Benachrichtigungssignals;
wobei das automatische Initialisieren Folgendes umfasst:
Bestimmen durch einen Bewegungssensor (2) aus der Vielzahl von Bewegungssensoren (2), dass er beim Einschalten in dem Master-Modus betrieben werden soll, und Initialisieren dieses Bewegungssensors (2) für den Betrieb in dem Master-Modus, einschließlich des Sendens von Initialisierungsanweisungen an die verbleibenden Bewegungssensoren (2);
Initialisieren der verbleibenden Bewegungssensoren (2) für den Betrieb in dem Slave-Modus basierend auf den Initialisierungsanweisungen;
wobei das Bestimmen eines der Folgenden umfasst:
Randomisieren einer ersten Zeitspanne, Bestimmen des Betriebs in dem Master-Modus, wenn bestimmt wird, dass der Bewegungssensor (2) innerhalb der ersten Zeitspanne keine Initialisierungsanweisungen von den verbleibenden Bewegungssensoren (2) erhalten hat, oder;
Randomisieren einer Zahl, Bestimmen des Betriebs in dem Master-Modus, wenn bestimmt wird, dass die Zufallszahl gleich oder größer als ein vorgegebener Schwellenwert ist, erneutes Randomisieren der Zahl, wenn bestimmt wird, dass der Bewegungssensor (2) innerhalb einer vorgegebenen zweiten Zeitspanne keine Initialisierungsanweisungen erhalten hat.

2. Verfahren nach Anspruch 1, wobei jeder Bewegungssensor (2) aus der Vielzahl von Bewegungssensoren (2) einen Hardware-Indikator umfasst, der konfiguriert ist, um von einem Benutzer in eine Vielzahl von Zuständen eingestellt werden zu können, und
wobei das Bestimmen das Bestimmen umfasst, in dem Master-Modus betrieben zu werden, wenn sich der Hardware-Indikator in einem ersten Zustand aus der Vielzahl von Zuständen befindet.

3. Verfahren nach einem der vorstehenden Ansprüche, wobei das automatische Initialisieren das Einschalten aller Bewegungssensoren (2) aus der Vielzahl von Bewegungssensoren (2) im Wesentlichen zur gleichen Zeit umfasst, und/oder;
wobei jeder Bewegungssensor (2) sowohl für den Betrieb in dem Master-Modus als auch für den Betrieb in dem Slave-Modus initialisiert werden kann.

4. Verfahren nach einem der vorstehenden Ansprüche, ferner umfassend eines der Folgenden:
Senden von Beleuchtungsanweisungen durch den in dem Master-Modus betriebenen Bewegungssensor (2) zum Ausschalten der einen oder mehreren Beleuchtungseinheiten (3), wenn bestimmt wird, dass der Bewegungssensor (2) innerhalb einer vorbestimmten dritten Zeitspanne kein Benachrichtigungssignal empfangen hat, oder;
Senden von Beleuchtungsanweisungen durch den in dem Master-Modus betriebenen Bewegungssensor (2) zum Einschalten der einen oder mehreren Beleuchtungseinheiten (3), wenn der in de Master-Modus betriebene Bewegungssensor (2) eine Bewegung erkennt, und vorzugsweise Senden von Beleuchtungsanweisungen durch den in dem Master-Modus betriebenen Bewegungssensor (2) zum Ausschalten der einen oder mehreren Beleuchtungseinheiten (3), wenn bestimmt wird, dass der in dem Master-Modus betriebene Bewegungssensor (2) innerhalb einer vorbestimmten vierten Zeitspanne keine Bewegung erkannt hat.

5. Verfahren nach Anspruch 4, wobei Beleuchtungsanweisungen zum Ausschalten der einen oder mehreren Beleuchtungseinheiten (3) gesendet werden, wenn bestimmt wird, dass der in dem Master-Modus betriebene Bewegungssensor (2) weder ein Benachrichtigungssignal empfangen noch innerhalb einer vorbestimmten fünften Zeitspanne eine Bewegung erkannt hat;
wobei die vorbestimmte fünfte Zeitspanne vorzugsweise gleich der dritten und/oder vierten Zeitspanne ist.

6. Bewegungssensor (2), der für den Betrieb in einem Beleuchtungssystem (1) konfiguriert ist, um das eine oder die mehreren Beleuchtungseinheiten (3) zu umfassen, wobei der Bewegungssensor (2) und eine Vielzahl anderer Bewegungssensoren (2) funktionsgleich sind, wobei der Bewegungssensor (2) Folgendes umfasst:
Kommunikationsmittel, die zur Kommunikation mit der einen oder den mehreren Beleuchtungseinheiten (3) und den anderen Bewegungssensoren (2) in dem Beleuchtungssystem (1) konfiguriert sind;
Verarbeitungsmittel, konfiguriert zum:
automatischen Initialisieren des Bewegungssensors (2), um entweder in dem Master-Modus oder in dem Slave-Modus betrieben zu werden;
wobei die Verarbeitungsmittel konfiguriert sind, um, wenn der Bewegungssensor (2) in dem Slave-Modus betrieben wird, bei Erkennen einer Bewegung ein Benachrichtigungssignal an einen Bewegungssensor (2) unter den anderen Bewegungssensoren (2) zu senden, der in dem Master-Modus betrieben wird;
wobei die Verarbeitungsmittel konfiguriert sind, um, wenn der Bewegungssensor (2) in dem Master-Modus betrieben wird, nach Empfang des Benachrichtigungssignals von einem oder mehreren der anderen Bewegungssensoren (2) Beleuchtungsanweisungen zum Einschalten der einen oder mehreren Beleuchtungseinheiten (3) über die Kommunikationsmittel zu senden;
wobei die Verarbeitungsmittel konfiguriert sind, um eine automatische Initialisierung durchzuführen, währenddessen die Verarbeitungsmittel Folgendes tun:
Bestimmen, ob der Bewegungssensor (2) beim Einschalten in dem Master-Modus betrieben werden soll;
Initialisieren des Bewegungssensors (2), um in dem Master-Modus betrieben zu werden, wenn bestimmt wird, dass der Bewegungssensor (2) in dem Master-Modus betrieben werden soll, wobei das Initialisieren das Senden der Initialisierungsanweisungen über die Kommunikationsmittel an die anderen Bewegungssensoren (2) in dem Beleuchtungssystem (1) einschließt;
Initialisieren des Bewegungssensors (2) für den Betrieb in dem Slave-Modus, wenn der Bewegungssensor (2) nicht für den Betrieb in dem Master-Modus initialisiert wurde, und zwar als Reaktion auf den Empfang von entsprechenden Initialisierungsanweisungen von einem anderen Bewegungssensor (2) in dem Beleuchtungssystem (1); wobei die Verarbeitungsmittel konfiguriert sind, um zu bestimmen, ob der Bewegungssensor (2) in dem Master-Modus betrieben werden soll, währenddessen die Verarbeitungsmittel Folgendes tun:
Randomisieren einer ersten Zeitspanne, und Bestimmen, dass der Bewegungssensor (2) in dem Master-Modus betrieben werden soll, wenn bestimmt wird, dass der Bewegungssensor (2) innerhalb der ersten Zeitspanne keine Initialisierungsanweisungen von den anderen Bewegungssensoren (2) erhalten hat, oder;
Randomisieren einer Zahl, Bestimmen, dass der Bewegungssensor (2) in dem Master-Modus betrieben werden soll, wenn bestimmt wird, dass die Zufallszahl gleich oder größer als ein vorbestimmter Schwellenwert ist, und erneutes Randomisieren der Zahl, wenn bestimmt wird, dass der Bewegungssensor (2) innerhalb einer vorbestimmten zweiten Zeitspanne keine Initialisierungsanweisungen erhalten hat.

7. Bewegungssensor (2) nach Anspruch 6, der ferner einen Hardware-Indikator umfasst, der konfiguriert ist, um von einem Benutzer in einen von einer Vielzahl von Zuständen versetzt werden zu können, und wobei die Verarbeitungsmittel konfiguriert sind, um zu bestimmen, ob der Bewegungssensor (2) in dem Master-Modus betrieben werden soll, währenddessen die Verarbeitungsmittel Folgendes tun:
Bestimmen, dass der Bewegungssensor (2) in dem Master-Modus betrieben werden soll, wenn sich der Hardware-Indikator in einem ersten Zustand aus der Vielzahl von Zuständen befindet.

8. Bewegungssensor nach einem der Ansprüche 6 bis 7, wobei die Verarbeitungsmittel konfiguriert sind, um, wenn der Bewegungssensor (2) in dem Master-Modus betrieben wird, um eines der Folgenden zu tun:
Senden von Beleuchtungsanweisungen über die Kommunikationsmittel zum Ausschalten der einen oder mehreren Beleuchtungseinheiten (3), wenn bestimmt wird, dass für eine vorbestimmte dritte Zeitspanne keine Benachrichtigungssignale empfangen wurden, oder;
Senden von Beleuchtungsanweisungen zum Einschalten der einen oder mehreren Beleuchtungseinheiten (3) bei Erkennen einer Bewegung, und vorzugsweise Senden von Beleuchtungsanweisungen über die Kommunikationsmittel zum Ausschalten der einen oder mehreren Beleuchtungseinheiten (3), wenn bestimmt wird, dass für eine vorbestimmte vierte Zeitspanne keine Bewegung erkannt wurde.

9. Bewegungssensor (2) nach Anspruch 8, wobei die Verarbeitungsmittel konfiguriert sind, um die Beleuchtungsanweisungen zum Ausschalten der einen oder mehreren Beleuchtungseinheiten (3) zu senden, wenn bestimmt wird, dass der in dem Master-Modus betriebene Bewegungssensor (2) weder ein Benachrichtigungssignal empfangen noch für eine vorbestimmte fünfte Zeitspanne eine Bewegung erkannt hat;
wobei die fünfte Zeitspanne vorzugsweise gleich der dritten und/oder vierten Zeitspanne ist.

10. Bewegungssensor (2) nach einem der Ansprüche 6 bis 9, wobei die Kommunikationsmittel zum Senden des Benachrichtigungssignals an den in dem Master-Modus betriebenen Bewegungssensor (2) ferner zum Senden des Benachrichtigungssignals konfiguriert sind und/oder;
wobei die Kommunikationsmittel zum Senden der Initialisierungsanweisungen an die anderen Bewegungssensoren in dem Beleuchtungssystem (1) ferner zum Senden der Initialisierungsanweisungen konfiguriert sind und/oder;
wobei die Kommunikationsmittel zum Senden von Beleuchtungsanweisungen ferner zum Senden der Beleuchtungsanweisungen konfiguriert sind.

11. Beleuchtungssystem (1), das eine Vielzahl von Bewegungssensoren (2) nach einem der Ansprüche 6 bis 10 und eine oder mehrere Beleuchtungseinheiten (3) umfasst, wobei jede Beleuchtungseinheit (3) konfiguriert ist, um Beleuchtungsanweisungen von einem beliebigen der Bewegungssensoren (2) aus der Vielzahl der Bewegungssensoren (2) zu empfangen.

12. Beleuchtungssystem (1) nach Anspruch 11, ferner umfassend:
- einen Steuerbus (4), mit dem die eine oder mehreren Beleuchtungseinheiten (3) verbunden sind, und mit dem die Vielzahl von Bewegungssensoren (2) über ihre jeweiligen Kommunikationsmittel verbunden ist, und/oder;
- eine Stromleitung, mit der die eine oder mehreren Beleuchtungseinheiten (3), und die Vielzahl von Bewegungssensoren (2) verbunden sind.

13. Beleuchtungssystem (1) nach Anspruch 11 oder 12, wobei jede der einen oder mehreren Beleuchtungseinheiten (3) Folgendes umfasst:
ein oder mehrere Lichter;
Kommunikationsmittel, die zum Empfangen der Beleuchtungsanweisungen konfiguriert sind, und
Verarbeitungsmittel, die konfiguriert sind, um die eine oder mehreren Leuchten ein- oder auszuschalten, wenn sie entsprechende Beleuchtungsanweisungen erhalten;
wobei die eine oder mehreren Beleuchtungseinheiten (3) vorzugsweise über ihre jeweiligen Kommunikationsmittel mit dem Steuerbus (4) verbunden sind.

## Revendications

1. Procédé destiné à faire fonctionner un système d'éclairage (1) comprenant une ou plusieurs unités d'éclairage (3) et une pluralité de capteurs de mouvement (2) fonctionnellement identiques, comprenant :
l'auto-initialisation, par le système d'éclairage (1), d'un capteur de mouvement (2) dans le système d'éclairage (1) pour fonctionner dans un mode maître, et des capteurs de mouvement (2) restants dans le système d'éclairage (1) pour fonctionner dans un mode esclave ;
l'envoi d'un signal de notification, par au moins un capteur de mouvement (2) fonctionnant dans le mode esclave, au capteur de mouvement (2) fonctionnant dans le mode maître lorsque ledit au moins un capteur de mouvement (2) fonctionnant dans le mode esclave détecte un mouvement ;
l'envoi d'instructions d'éclairage, par le capteur de mouvement (2) fonctionnant dans le mode maître, pour allumer la ou les unités d'éclairage (3) à la réception dudit signal de notification ;
dans lequel ladite auto-initialisation comprend :
la détermination, par un capteur de mouvement (2) parmi la pluralité de capteurs de mouvement (2), qu'il doit fonctionner dans le mode maître lorsqu'il est allumé, et l'initialisation de ce capteur de mouvement (2) pour fonctionner dans le mode maître, comportant l'envoi d'instructions d'initialisation aux capteurs de mouvement (2) restants ;
l'initialisation des capteurs de mouvement (2) restants pour fonctionner dans le mode esclave en fonction des instructions d'initialisation ;
dans lequel ladite détermination comprend soit :
la randomisation d'une première quantité de temps, la détermination de fonctionner dans le mode maître lors d'une détermination que ledit capteur de mouvement (2) n'a pas reçu d'instructions d'initialisation provenant des capteurs de mouvement (2) restants au cours de la première quantité de temps, soit ;
la randomisation d'un nombre, la détermination de fonctionner dans le mode maître lorsqu'il est déterminé que le nombre aléatoire est égal à, ou plus grand qu'un seuil prédéterminé, la randomisation du nombre à nouveau lors d'une détermination que ledit capteur de mouvement (2) n'a pas reçu d'instructions d'initialisation au cours d'une deuxième quantité de temps prédéterminée.

2. Procédé selon la revendication 1, dans lequel chaque capteur de mouvement (2) parmi la pluralité de capteurs de mouvement (2) comprend un indicateur matériel configuré pour être réglé par un utilisateur dans une pluralité d'états, et
dans lequel ladite détermination comprend la détermination de fonctionner dans le mode maître si l'indicateur matériel est dans un premier état parmi la pluralité d'états.

3. Procédé selon l'une quelconque des revendications précédentes, dans lequel ladite auto-initialisation comprend l'allumage de la totalité des capteurs de mouvement (2) parmi la pluralité de capteurs de mouvement (2) sensiblement en même temps, et/ou ;
dans lequel chaque capteur de mouvement (2) peut être initialisé pour fonctionner dans le mode maître, et être initialisé pour fonctionner dans le mode esclave.

4. Procédé selon l'une quelconque des revendications précédentes, comprenant en outre soit :
l'envoi d'instructions d'éclairage, par le capteur de mouvement (2) fonctionnant dans le mode maître, pour éteindre la ou les unités d'éclairage (3), lors d'une détermination que ledit capteur de mouvement (2) n'a pas reçu un signal de notification au cours d'une troisième quantité de temps prédéterminée, soit ;
l'envoi d'instructions d'éclairage, par le capteur de mouvement (2) fonctionnant dans le mode maître, pour allumer la ou les unités d'éclairage (3) lorsque ledit capteur de mouvement (2) fonctionnant dans le mode maître détecte un mouvement, et de préférence l'envoi d'instructions d'éclairage, par le capteur de mouvement (2) fonctionnant dans le mode maître, pour éteindre la ou les unités d'éclairage (3), lors d'une détermination que le capteur de mouvement (2) fonctionnant dans le mode maître n'a pas détecté de mouvement au cours d'une quatrième quantité de temps prédéterminée.

5. Procédé selon la revendication 4, dans lequel les instructions d'éclairage pour éteindre la ou les unités d'éclairage (3) sont envoyées lors d'une détermination que le capteur de mouvement (2) fonctionnant dans le mode maître n'a ni reçu un signal de notification, ni détecté de mouvement au cours d'une cinquième quantité de temps prédéterminée ;
dans lequel la cinquième quantité de temps prédéterminée est de préférence égale aux troisième et/ou quatrième quantités de temps.

6. Capteur de mouvement (2) configuré pour fonctionner dans un système d'éclairage (1) qui comprend une ou plusieurs unités d'éclairage (3), ledit capteur de mouvement (2) et une pluralité d'autres capteurs de mouvement (2) fonctionnellement identiques à celui-ci, le capteur de mouvement (2) comprenant :
des moyens de communication configurés pour communiquer avec la ou les unités d'éclairage (3), et les autres capteurs de mouvement (2) dans le système d'éclairage (1) ;
des moyens de traitement, configurés pour :
auto-initialiser le capteur de mouvement (2) pour fonctionner soit dans un mode maître soit dans un mode esclave ;
dans lequel les moyens de traitement sont configurés, lorsque le capteur de mouvement (2) fonctionne dans le mode esclave, pour envoyer un signal de notification à un capteur de mouvement (2) parmi les autres capteurs de mouvement (2) qui fonctionne dans le mode maître, lors de la détection d'un mouvement ;
dans lequel les moyens de traitement sont configurés, lorsque le capteur de mouvement (2) fonctionne dans le mode maître, pour envoyer des instructions d'éclairage par l'intermédiaire des moyens de communication pour allumer la ou les unités d'éclairage (3), à la réception du signal de notification en provenance d'un ou plusieurs desdits autres capteurs de mouvement (2) ;
dans lequel les moyens de traitement sont configurés pour mettre en œuvre une auto-initialisation pendant laquelle les moyens de traitement :
déterminent si le capteur de mouvement (2) doit fonctionner dans le mode maître lorsqu'il est allumé ;
initialiser le capteur de mouvement (2) pour fonctionner dans le mode maître lors d'une détermination que le capteur de mouvement (2) doit fonctionner dans le mode maître, ladite initialisation comportant l'envoi desdites instructions d'initialisation aux autres capteurs de mouvement (2) dans le système d'éclairage (1) par l'intermédiaire des moyens de communication ;
initialiser le capteur de mouvement (2) pour fonctionner dans le mode esclave lorsque le capteur de mouvement (2) n'a pas été initialisé pour fonctionner dans le mode maître et en réponse à la réception d'instructions d'initialisation en provenance d'un autre capteur de mouvement (2) dans le système d'éclairage (1) pour le faire ; dans lequel les moyens de traitement sont configurés pour déterminer si le capteur de mouvement (2) doit fonctionner dans le mode maître pendant lequel les moyens de traitement :
randomisent une première quantité de temps, et déterminent que le capteur de mouvement (2) doit fonctionner dans le mode maître lors d'une détermination que ledit capteur de mouvement (2) n'a pas reçu d'instructions d'initialisation en provenance des autres capteurs de mouvement (2) au cours de la première quantité de temps, ou ;
randomisent un nombre, déterminent que le capteur de mouvement (2) doit fonctionner dans le mode maître lorsqu'il est déterminé que le nombre aléatoire est égal à, ou plus grand qu'un seuil prédéterminé, et randomisent le nombre à nouveau, lors d'une détermination que ledit capteur de mouvement (2) n'a pas reçu d'instructions d'initialisation au cours d'une deuxième quantité de temps prédéterminée.

7. Capteur de mouvement (2) selon la revendication 6, comprenant en outre un indicateur matériel configuré pour être réglé par un utilisateur dans l'un parmi une pluralité d'états, et dans lequel les moyens de traitement sont configurés pour déterminer si le capteur de mouvement (2) doit fonctionner dans le mode maître pendant lequel les moyens de traitement :
déterminent que le capteur de mouvement (2) doit fonctionner dans le mode maître si l'indicateur matériel est dans un premier état parmi la pluralité d'états.

8. Capteur de mouvement selon l'une quelconque des revendications 6 à 7, dans lequel les moyens de traitement sont configurés, lorsque le capteur de mouvement (2) fonctionne dans le mode maître, pour soit :
envoyer des instructions d'éclairage par l'intermédiaire des moyens de communication pour éteindre la ou les unités d'éclairage (3) lors d'une détermination que des signaux de notification n'ont pas été reçus pendant une troisième quantité de temps prédéterminée, soit ;
envoyer des instructions d'éclairage pour allumer la ou les unités d'éclairage (3) lors de la détection d'un mouvement, et de préférence pour envoyer des instructions d'éclairage par l'intermédiaire des moyens de communication pour éteindre la ou les unités d'éclairage (3), lors d'une détermination qu'aucun mouvement n'a été détecté pendant une quatrième quantité de temps prédéterminée.

9. Capteur de mouvement (2) selon la revendication 8, dans lequel les moyens de traitement sont configurés pour envoyer les instructions d'éclairage pour éteindre la ou les unités d'éclairage (3) lors d'une détermination que le capteur de mouvement (2) fonctionnant dans le mode maître n'a ni reçu un signal de notification, ni détecté de mouvement pendant une cinquième quantité de temps prédéterminée ;
dans lequel la cinquième quantité de temps est de préférence égale aux troisième et/ou quatrième quantités de temps.

10. Capteur de mouvement (2) selon l'une quelconque des revendications 6 à 9, dans lequel les moyens de communication, pour envoyer le signal de notification au capteur de mouvement (2) fonctionnant dans le mode maître, sont configurés en outre pour diffuser le signal de notification, et/ou ;
dans lequel les moyens de communication, pour envoyer les instructions d'initialisation aux autres capteurs de mouvement dans le système d'éclairage (1), sont configurés en outre pour diffuser les instructions d'initialisation, et/ou ;
dans lequel les moyens de communication, pour envoyer des instructions d'éclairage, sont configurés en outre pour diffuser les instructions d'éclairage.

11. Système d'éclairage (1) comprenant une pluralité de capteurs de mouvement (2) selon l'une quelconque des revendications 6 à 10, et une ou plusieurs unités d'éclairage (3), chaque unité d'éclairage (3) étant configurée pour recevoir des instructions d'éclairage en provenance de l'un quelconque des capteurs de mouvement (2) parmi la pluralité de capteurs de mouvement (2).

12. Système d'éclairage (1) selon la revendication 11, comprenant en outre :
- un bus de commande (4) auquel la ou les unités d'éclairage (3) sont connectées, et auquel la pluralité de capteurs de mouvement (2) est connectée via leurs moyens de communication respectifs, et/ou ;
- une ligne de puissance à laquelle la ou les unités d'éclairage (3), et la pluralité de capteurs de mouvement (2) sont connectés.

13. Système d'éclairage (1) selon la revendication 11 ou 12, dans lequel chacune parmi la ou les unités d'éclairage (3) comprend :
une ou plusieurs lumières ;
des moyens de communication, configurés pour recevoir les instructions d'éclairage, et
des moyens de traitement configurés pour allumer ou éteindre la ou les lumières à la réception d'instructions d'éclairage pour le faire ;
dans lequel la ou les unités d'éclairage (3) sont de préférence connectées au bus de commande (4) par l'intermédiaire de leurs moyens de communication respectifs.
